# EUROPEAN PATENT SPECIFICATION

(11) **EP 3 355 425 B1**
(45) Date of publication and mention of the grant of the patent: **20.10.2021**
(21) Application number: 17153932.3
(22) Date of filing: 31.01.2017
(51) Int. Cl.: H02G 3/08, H02G 3/12

(54) **ASSEMBLY OF AN INSTALLATION BOX AND ELECTRIC INSTALLATION MATERIAL, INSTALLATION BOX AND AIRTIGHT INSERT**
ANORDNUNG EINES INSTALLATIONSKASTENS UND ELEKTRISCHES INSTALLATIONSMATERIAL, INSTALLATIONSKASTEN UND LUFTDICHTER EINSATZ
ASSEMBLAGE D'UNE BOÎTE D'INSTALLATION ET MATÉRIEL D'INSTALLATION ÉLECTRIQUE, BOÎTE D'INSTALLATION ET INSERT ÉTANCHE À L'AIR

(43) Date of publication of application: 01.08.2018
(73) Proprietor: ABB Schweiz AG, 5400 Baden (CH)
(72) Inventor: Renckens, Tom, 3742ND BAARN (NL)
(74) Representative: van Trier, Norbertus Henricus Gerardus

(56) References cited:
- EP-A1- 3 059 822
- CH-A2- 706 106
- DE-A1-102008 015 128
- DE-A1-102013 104 768
- FR-A1- 3 000 312
- US-B1- 9 258 919

## Description

### BACKGROUND

The invention relates to an assembly of an installation box and electric installation material with electric wirings, the installation box comprising a housing with a first bottom wall and a first circumferential wall upright from the first bottom wall, wherein the first bottom wall and the first circumferential wall together confine an installation space for electric installation material, wherein an upper edge of the first circumferential wall facing away from the first bottom wall confines an installation opening for providing access to the installation space, wherein the first circumferential wall is provided with a passage for electric wirings to pass through the first circumferential wall. The invention further relates to an installation box and an airtight insert.

Such installation boxes are applied in electric installations in utility constructions, whereby the installations boxes are installed in a hollow wall. The ends of electric cables or wires of the electric installations are inserted through the passage in the first circumferential wall into the installation boxes to be connected to further installation material, for example a socket or a light switch, which is installed onto a front plate of the hollow wall.

CH 706 106 is known prior art relating to an installation box with a box body made of plastic e.g. thermoplastic or a thermosetting polymer. The box body is formed with an equipment, a lining or a coating and protects the installation box against nuclear radiation e.g. alpha, beta and/or gamma radiations. The box body is lined or coated with material, which shields the installation box against the nuclear radiation. The box body comprises a bottom, which is covered with highly effective radiation protection material. A metal part is applied on the bottom of the box body. The highly effective radiation protection material is plastic material filled with bismuth or tungsten or plastic material filled with barium sulfate or magnetite.

DE 10 2013 104768 is known prior art relating to an installation box for electrical engineering purposes for installation in the insulation of buildings, the installation box having a floor, a peripheral side wall connected to the floor and a front installation opening, the installation box being made of heat-insulating material.

EP 3 059 822 is known prior art relating to an electrical installation box assembly for installation into an opening in a wall, comprising a fastening part comprising a tubular side wall portion, at least one flange portion, and at least one flexibly mounted projection extending radially from the side wall portion and adapted to engage the wall in its resting position when the fastening part is inserted inside the opening in the wall such that the at least one flange portion is in contact with the wall and a box case, wherein an outer diameter of a side wall portion of the box case is equal to or smaller than an inner diameter of the side wall portion of the fastening part such that upon inserting the box case into the fastening part, the box case locks the at least one projection of the fastening part into its resting position.

FR 3 000 312 is known prior art relating to an electrical box comprising a body which has a side wall closed at the rear by a bottom wall to delimit an interior volume for receiving at least one apparatus. electric. According to the invention, this electrical box comprises at least one metallic electrical connection element which is fixed to said body and which comprises an internal terminal for the connection of said electrical equipment, and an external terminal which is located outside the body for the connection of an electrical conductor, said bottom wall being arranged to give access by said interior volume to the interior terminal of said metallic element of electrical connection.

DE 10 2008 015128 is known prior art relating to a cover with claw region sealing elements provided in a wall of a pot, where the cover is formed from a soft elastomer. Attachment claws of a flush mounted installation device are sealingly pressed against a wall of a flush mounted electrical outlet. A pot collar is provided at its surface arranged to a wall with a circulating wall connecting sealing element. Inside diameter of the outlet is larger than an outside diameter of the pot, so that the cover is connected with the installation device and the outlet by an equipment base.

US 9 258 919 is known prior art relating to a fire protection device in the form of an insert designed to be quickly installed in new or existing electrical boxes located in firewalls. This insert is comprised of a material designed to withstand high direct heat and serve as a barrier to the passage of direct heat or smoke and gases through firewalls rated under ASTM E-119. The insert features a flanged open end which overlaps any gaps between the existing electrical box and the wall. The back wall of the insert box may have either openings to permit wires to pass through to the electrical device or a plug-harness assembly which obviates the use of holes in the back of the insert box.

A disadvantage of the known installation boxes is that due to the passage in the first circumferential wall and the installation opening being in direct communication with each other, therewith forming a flow channel through the installation box via which a draught occurs by air flowing freely through the installation opening, the passage in the first circumferential wall and subsequently into the hollow wall, or vice versa. Such draught gives people near or around the installation boxes the impression that a cold wind flow is present from or towards the installation box. Such cold wind flow reduces the comfort of the utility construction and the energy efficiency of the utility construction. Furthermore, dust and dirt can be transported from the inside of the wall to the front surface of the wall resulting in a dirty surface around the socket or switch.

It is an object of the present invention to provide an improved installation box.

### SUMMARY OF THE INVENTION

According to a first aspect, the invention provides an assembly of an installation box and electric installation material as defined in independent claim 1.

Since the airtight insert is placed inside the installation space and therewith between the passage in the first circumferential wall and the installation opening, the flow channel through the installation box is blocked. Thus, air may be prevented from flowing through the installation opening, the passage and subsequently into a hollow wall, or vice versa. The installation opening has thus a positive contribution to the comfort of the utility construction and an improved installation box is therewith provided.

Further, since the outside of the airtight insert and the inside of the housing of the installation box beyond the installation opening and the passage are complementary to each other, a tight fitting of the airtight insert within the housing of the installation box may be accomplished. Additionally, due to the tight fitting of the airtight insert, the volume of the installation space available for installing electric installation material may be used to the utmost.

According to the invention, the airtight insert comprises an inner layer and an outer layer, wherein the inner layer is manufactured from the rigid material and the outer layer is manufactured from the elastic material. The rigid layer may contribute to maintaining the shape of the airtight insert during use thereof, such that the installation space remains useable optimally. The layer of elastic material may contribute to the airtightness of the airtight insert. Due to the elastic material it is relatively simple to accomplish airtightness for example by tightly enclosing the wires of the electric wirings by the elastic material. It is further advantageous that the airtight insert may be handled as a single unit.

In an embodiment the airtight insert comprises an airtight flange provided at or near the upper edge of the second circumferential wall. Advantageously the airtight insert is part of the outer layer of the airtight insert. In a further embodiment the airtight flange extends in a direction substantially parallel or parallel to the second bottom wall and over and beyond the upper edge of the first circumferential wall, wherein the airtight flange is configured to abut at least a part of the installation material. Due to the airtight flange and the elastic material thereof, an opening between a mounting plate of the installation material installed to the front plate of the hollow wall and the front plate itself is closed by the airtight flange, in particular by the mounting plate abutting against the airtight flange. Therefore the possible flow channel through the installation box may be closed at both ends thereof and/or air is prevented from flowing along the outside of the housing of the installation box towards or away from the front plate of the hollow wall.

In an embodiment the installation box is provided with two or more first flanges that form one unity with and project from the first circumferential wall in a direction parallel to the first bottom wall, and wherein the airtight flange comprises two or more receiving recesses at a side of the airtight flange facing the first and/or second bottom wall, wherein each of the receiving recesses is adapted for receiving one of the two or more first flanges. By receiving the first flanges of the housing of the installation box, preferably completely, the underside of the airtight flange may become flush with the underside of the first flanges, therewith accomplishing that the underside of the airtight flange may abut, in particular completely, to the front plate of the hollow wall. Due to the underside of the airtight flange abutting the front plate of the hollow wall, air is prevented from flowing between the airtight flange and the front plate.

In an embodiment the installation box comprises two or more opposite mounting plates adjacent to the upper edge of the first circumferential wall, in which mounting screws for the installation material are received, wherein the airtight insert comprises two or more opposite securing plates adjacent to the upper edge of the second circumferential wall, which securing plates are placed onto the mounting plates and through which the mounting screws pass. The airtight insert may therefore be installed concurrently with the installation box and shall be clamped between the housing of the installation box and the installation material, in particular the mounting plate of the installation material. The airtight insert is thus easily installable together with the installation box without the need for additional operations or tools.

In an embodiment the securing plates are part of the inner layer of the airtight insert, i.e. the rigid inner layer of the airtight insert. By providing the securing plates in the rigid layer of the airtight insert, the securing plates are capable of withstanding forces applied to the securing plates via for example the mounting plate of the installation material, therewith establishing a reliable securing of the airtight insert to the housing of the installation box.

In an embodiment the outer layer of the airtight insert, i.e. the elastic outer layer, comprises securing openings for receiving the securing plates. By receiving the securing plates which are made of a rigid material inside the securing openings which are provided in the elastic material, the stability of the outer layer may be improved.

According to the invention, the first circumferential wall is provided with at least one pair of slide couplings, such that the installation box is coupleable (or linkable) with a further installation box, wherein the first circumferential wall is provided with a passage below each of the at least one pair of slide couplings, and the second circumferential wall is provided with at least one first membrane adjacent to the passage below the at least one pair of slide couplings. The at least one first membrane is provided by the outer layer of the airtight insert, i.e. the elastic layer in particular manufactured from a thermoplastic elastomer, and the first membrane is framed by an aperture in the inner layer of the airtight insert, i.e. the rigid layer. When an electric wire passes through the first membrane, the first membrane will abut the electric wire in a clamping manner over a few millimetres in length, like a cuff, such that an airtight seal is provided. Due to the airtight seal, the chance of a draught occurring along the wire is reduced or in an ideal situation eliminated. Due to the aperture being provided in the thermoplastic elastomer, it is relatively simple to puncture the first membrane in the outer layer with an end of an electrical wire by forcing the end of the electric wire through the outer layer. The framing of the first membrane (s) by means of the aperture in the rigid inner layer keeps the outer layer substantially in place during puncturing of the first membrane(s) in the outer layer in a direction from the outer layer towards the inner layer.

In an embodiment the airtight insert comprises two or more sub-flanges at or near the upper edge of the second circumferential wall. In an embodiment the airtight flange is provided with two or more flange openings for receiving the two or more sub-flanges. In a further embodiment the sub-flanges are part of the inner layer of the airtight insert. The sub-flanges preferably extend at least partially into the airtight flange, therewith improving the stability of the airtight flange such that the intended orientation of the airtight flange may be maintained.

According to the invention, the second circumferential wall has a second membrane with one or more target fractures that may be closed off by a membrane, through which the electric wirings can pass, wherein the electric wirings passing through the one or more target fractures are enclosed in an airtight manner, wherein the number of target fractures optionally corresponds to the number of wires of the electric wirings. In a further embodiment the second membrane with the one or more target fractures is provided in the outer layer of the airtight insert, and wherein the second membrane with the one or more target fractures is framed by at least one aperture provided in the inner layer of the airtight insert. When an electric wire punctures the membrane of the target fracture, the membrane will abut the electric wire in a clamping manner over a few millimetres in length, like a cuff, such that an airtight seal is provided. Due to the airtight seal, the chance of a draught occurring along the wire is reduced or in an ideal situation eliminated.

Additionally, due to the aperture being provided in the elastic outer layer, it may be relatively simple to puncture the outer layer with an end of an electrical wire by forcing the end of the electric wire through the outer layer. The framing of the second membrane with the one or more target fractures by means of the aperture in the rigid inner layer may keep the outer layer substantially in place during puncturing of the outer layer in a direction from the outer layer towards the inner layer.

Further, by providing a wire opening for each electric wire, wherein each wire opening encloses the electric wire in an airtight manner, the risk of air flowing through the wire openings between the airtight insert and the electric wires may be further reduced or eliminated.

In an embodiment the airtight insert is manufactured by means of injection moulding, preferably 2k injection moulding, wherein one component used is polypropylene and another component used is a thermoplastic elastomer. An advantage of this embodiment is that the airtight insert may be produced in a reliable manner.

According to a second aspect, the invention provides an installation box for use in an assembly according to the first aspect of the invention.

The installation box according to the second aspect of the invention has at least the advantages which are described in relation to the first aspect of the invention.

According to a third aspect, the invention provides an airtight insert for use in an assembly according to the first aspect of the invention or the installation box according to the second aspect of the invention.

According to a fourth aspect, the invention provides computer-readable medium having computer-executable instructions adapted to cause a 3D printer to print an installation box according to the second aspect of the invention or an airtight insert according to the third aspect of the invention.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows the installation box according to the invention without its airtight insert;
Figures 2A and 2B show an isometric view and a side view of the installation box of figure 1 with its airtight insert according to an embodiment of the invention; and
Figures 3A-3D are an exploded view of the installation box and the airtight insert of figures 2A and 2B, an isometric view of the airtight insert, an exploded view of the airtight insert, and an isometric side view of the airtight insert, respectively.

### DETAILED DESCRIPTION OF THE INVENTION

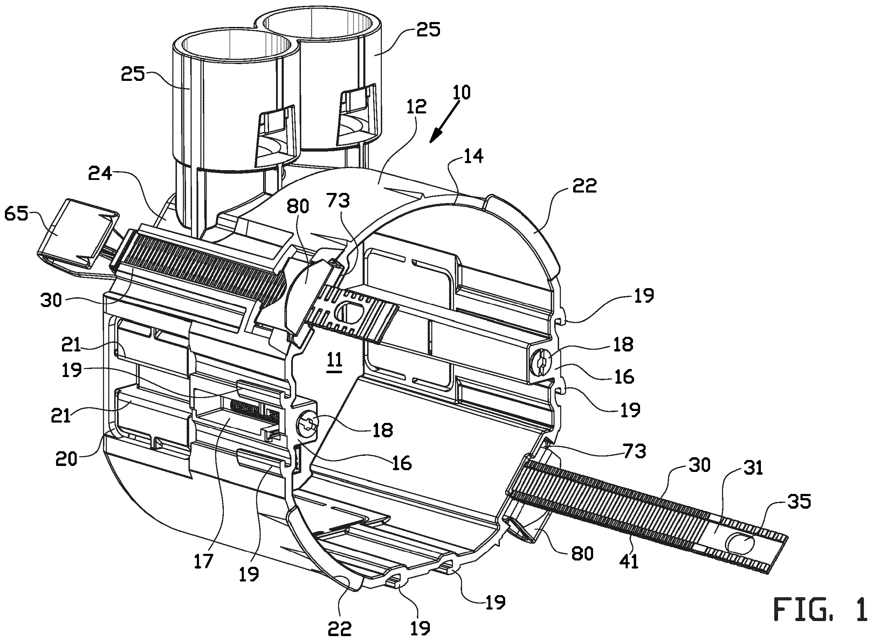

Figure 1 shows an installation box 10 in which an airtight insert 50 can be inserted according to an embodiment of the invention. The installation box 10 comprises a first bottom wall 11 and a first straight cylindrical circumferential wall 12 with central axis S. The upper edge 14 of the first circumferential wall 12 bounds an installation opening of the installation box 10. The first bottom wall 11 and the first circumferential wall 12 together confine an installation space, are made of plastic, in this example polypropylene, and form one rigid unity.

As best shown in figure 1, the installation box 10 comprises two opposite mounting plates 16 adjacent to the upper edge 14 in which mounting screws 18 are screwed. The mounting screws 18 extend through recessed channels 17 behind the mounting plates 16. At the same locations and in circumferential direction also in between the installation box 10 is provided with slide couplings 19 on the first circumferential wall 12 to couple multiple installation boxes 10 adjacent to each other in different configurations. Below the slide couplings 19 the first circumferential wall 12 is provided with square passages 20 that are closed off with breakout ports 21 that are removed for electric wirings between the coupled installation boxes 10. The installation box 10 is provided with first flanges 22 that form one unity with and that project from the first circumferential wall 12 to engage onto the front plate 2 of the hollow wall 1.

The installation box 10 comprises in this example one spout insert 24 having in this example two spouts 25 for coupling rigid or flexible pipes 4 of the electrical installation to the installation box 10 as schematically shown in figure 1. In circumferential direction the spout insert 24 is located symmetrically between the mounting screws 18. The spout insert 24 is inserted from the inside after the installation box 10 is placed in the hollow wall 1.

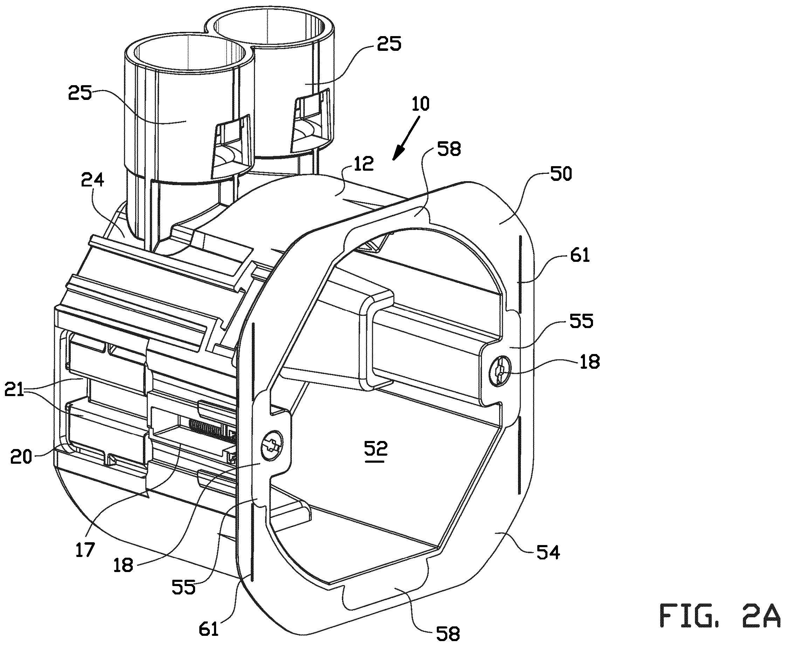

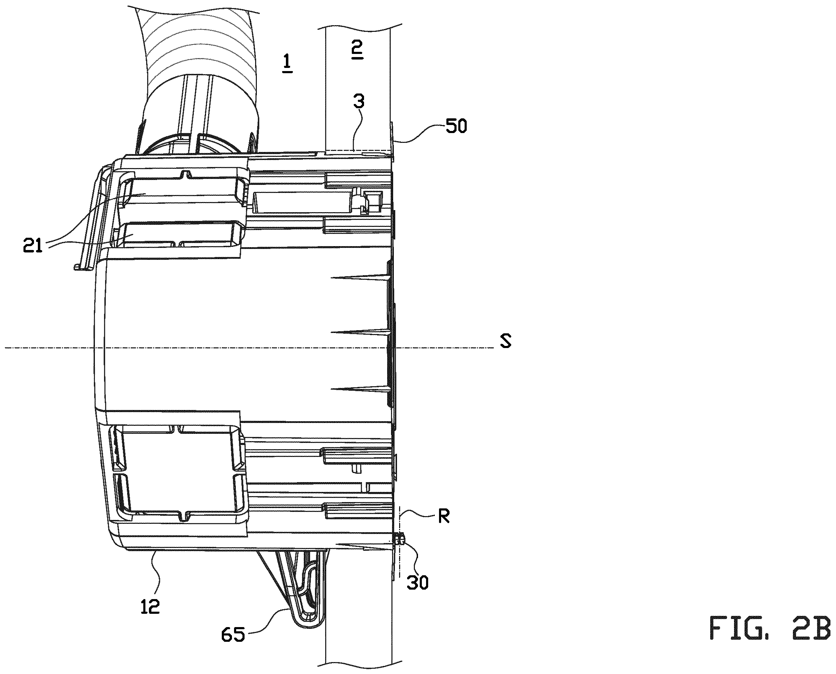

The installation box 10 is provided with two identical anchoring strips 30 for anchoring the installation box 10 in the front plate 2 of the hollow wall 1. The anchoring strips 30 are located opposite to each other and in circumferential direction at 85 to 95 degrees with respect to the opposite first flanges 22 and at about 40 degrees with respect to the mounting screws 18. The anchoring strips 30 are made of a plastic with a high tension strength, in particular POM (Polyoxymethylene), and comprise an elongate gripping section 31 that rectilinearly continues into an elongate tensioning section 41. At the opposite end the tensioning section 41 is connected to an anchoring section 65. As shown in figure 2, the gripping section 31 comprises a hole 35 in the middle thereof for insertion of a pulling tool, such as a screwdriver. As best shown in figure 1, the installation box 10 comprises two guide channels 73 in the first circumferential wall 12 in which the anchoring strip 30 is received. The anchoring strips 30 are locked by means of barbed metal inserts 80.

Figures 2A and 2B show the installation box 10 in which the airtight insert 50 is inserted into the installation space according to an embodiment of the invention. As schematically indicated in figure 2B, the installation box 10 is designed to be installed in a hollow wall 1 of a building to install the electrical installation thereof. The installation box 10 is inserted and secured into a circular hole 3 in the front plate 2 of the hollow wall 1. As shown in figure 2B, the anchoring strip 30 is ruptured along rupture line R when the installation box 10 with the airtight insert 50 has been installed. The airtight insert 50 is designed to be placed in the longitudinal direction of the central axis S inside the installation box 10 in order to prevent a draught of air through the installation opening of the installation box 10 and the spouts 25, or vice versa, and along the outside of the installation box 10.

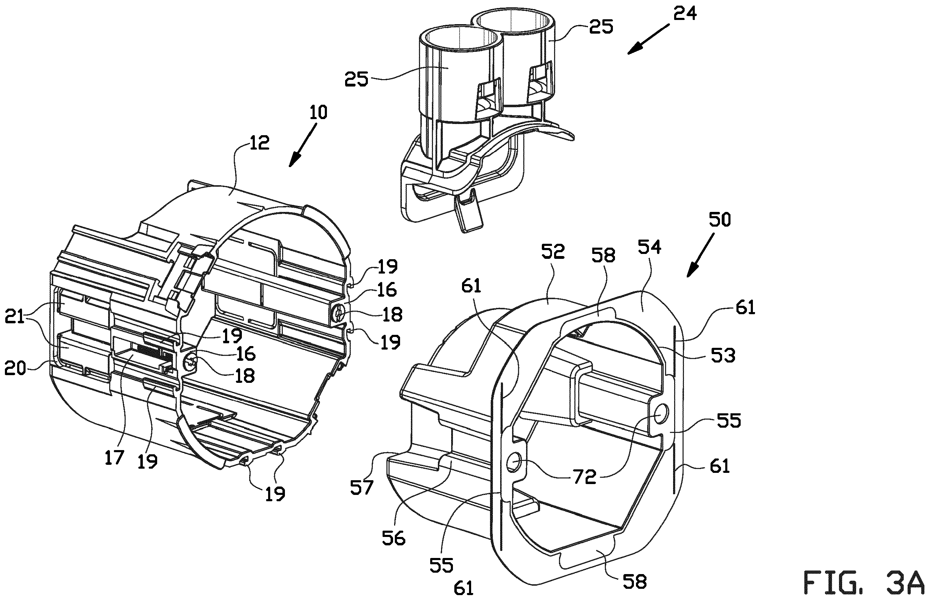

As shown in figures 3A-3C, the airtight insert 50 comprises a second bottom wall 51 and a second straight cylindrical circumferential wall 52 with central axis S. The upper edge 53 of the second circumferential wall 52 also bounds an installation opening, which installation opening overlaps the installation opening of the installation box 10 when the airtight insert 50 is inserted in the installation box 10. As can be seen in figure 2A, the outside of the second bottom wall 51 and the second circumferential wall 52 of the airtight insert 50 are beyond the installation opening and the passages 20 substantially complementary to the inside of the first bottom wall 11 and the first circumferential wall 12 of the installation box 10.

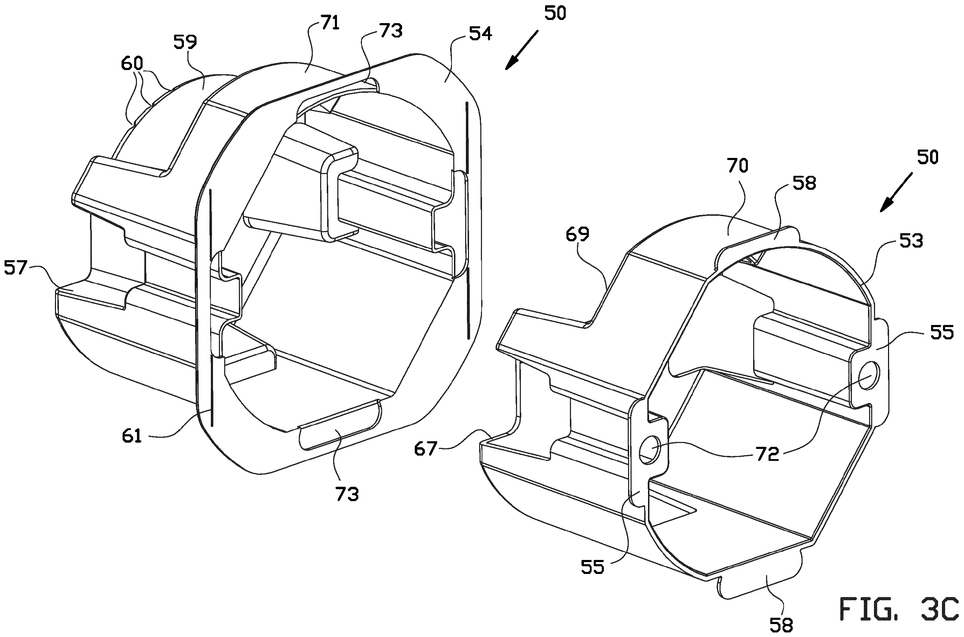

The airtight insert 50 is manufactured by injection moulding, for example 2K injection moulding. As can be seen in figure 3C, the airtight insert 50 has an inner layer 70 and an outer layer 71. In figure 3C, the inner layer 70 and the outer layer 71 are shown as separate elements, which is only for the purpose of elucidating the construction of the airtight insert 50. In practice, the airtight insert 50 is manufactured by 2K injection moulding and the inner layer 70 and the outer layer 71 are permanently attached to each other. The inner layer 70 is manufactured from a rigid polyolefin, in this example polypropylene (PP), and the outer layer 71 is manufactured from a thermoplastic elastomer. The inner layer 70 is provided for retaining the shape of the airtight insert 50. The thermoplastic elastomer is elastic at room temperature which is advantageous for the airtightness of the airtight insert 50.

As best shown in figures 2A and 3A, the airtight insert 50, in particular the outer layer 71 thereof, comprises at the upper edge 53 an airtight flange 54 which merges into the second circumferential wall 52. The airtight flange 54 extends radially outwards with respect to the central axis S, such that the airtight flange 54 is extending and lying fully over and beyond the upper edge 14 of the installation box 10 to engage the front plate 2 of the hollow wall 1. The inner layer 70 of the airtight insert 50 comprises two opposite securing plates 55 with securing openings 72 adjacent to the upper edge 53. As can be seen in figure 2A, the securing plates 55 of the airtight insert 50 are placed on top of the mounting plates 16 of the installation box 10, such that the heads of the mounting screws 18 pass loosely through securing openings 72 of the securing plates 55. The airtight insert 50 comprises insert channels 56 behind the securing plates 55, in which the channels 17 of the installation box 10 are confined. Below the insert channels 56 the outer layer 71 of the second circumferential wall 52 is provided with a virginal first membrane 57 which is framed by an aperture 67 in the inner layer 70, which virginal first membrane 57 is intended to be placed adjacent to one of the square passages 20 and can be punctured by the electric wirings between coupled installation boxes 10. After puncturing the first membrane 57 with for example an end of an electric wire in a direction from the outer layer 71 to the inner layer 70, the first membrane 57 will constrictive inwardly abut to the electric wire like a cuff, such that the first membrane 57 abuts tightly over a few millimeters in length against the electric wire, so that an airtight seal is provided. The first membrane 57 may be provided with a target fracture to facilitate its puncturing.

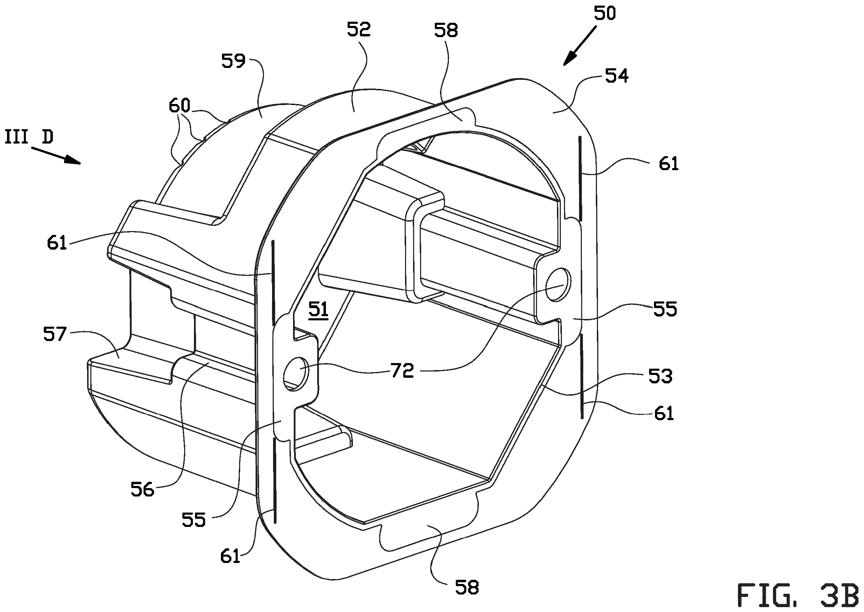

As shown in figures 3B and 3C the airtight flange 54 has two opposite sub-flanges 58 which are part of the inner layer 70 of the airtight insert 50. The outer layer 71 of the airtight insert 50, in particular the airtight flange 64 is provided with flange openings 73 for receiving the sub-flanges 58, such that the sub-flanges extend into a part of the airtight flange 54.

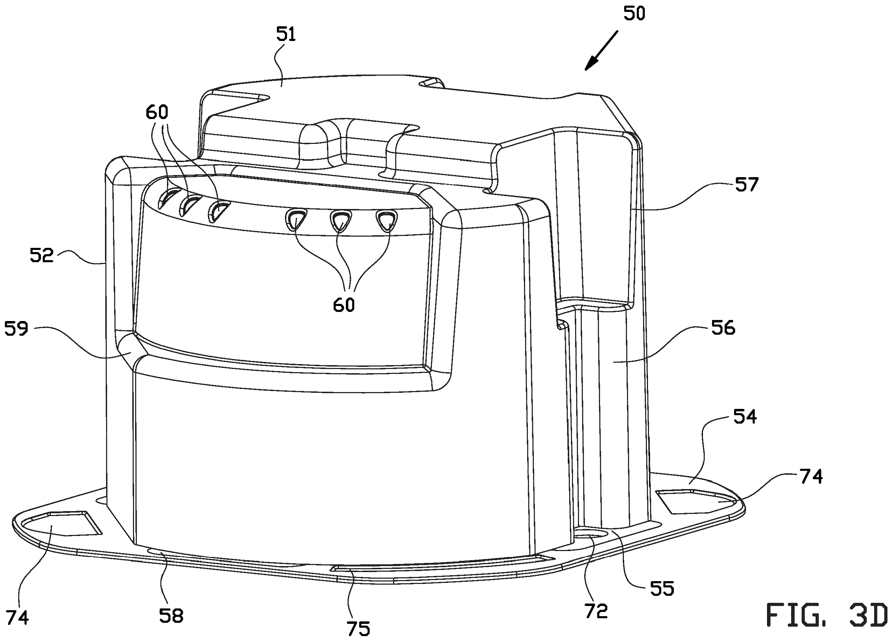

As shown in figure 3D the airtight flange 54 has first blind receiving recesses 74 for receiving an upper part of the barbed metal inserts 80 of the installation box 10. The airtight flange 54 has also second blind receiving recesses 75 for receiving the first flanges 22 of the installation box 10. Due to the first and second receiving recesses 74, 75 the underside of the airtight flange 54 can abut completely against the front plate 2 of the hollow wall 1.

As shown in for example figure 3B, aiding lines 61 are provided on top of the airtight flange 54 and thus on the outer layer 71, adjacent to each of the securing plates 55. When multiple (non-shown) installation boxes 10 are installed adjacent to each other, the airtight flange 54 can be cut off along the aiding lines 61. By cutting off the airtight flanges 54 of the installation boxes, which are directed towards each other, the installation boxes 10 can be placed adjacent to each other without the airtight flanges 54 overlapping each other, therewith providing an airtight mounting of the electric installation material onto the installation boxes 10 at the front plate 2 of the hollow wall 1. In the context of the present patent application, airtight mounting has to be understood as air is prevented from flowing between the installation material and the front plate 2 of the hollow wall.

As best shown in figure 3D the outer layer 71 of the airtight insert 50 has a virginal second membrane 59 framed by an aperture 69 in the inner layer 70, which second membrane 59 is complementary to the sprout insert 24. The second membrane 59 has target fractures 60 for passing of electric wirings from at least one of the sprouts 25, which target fractures 60 might be closed with a thinner virginal membrane when no wire passes through. Due to the elastic material of the membranes, after passing the target fracture 60 with for example an end of an electric wire in a direction from the outer layer 71 to the inner layer 70, thereby puncturing the thinner virginal membrane, the thinner membrane of the target fracture 60 will constrictive inwardly abut to the electric wire like a cuff, such that the membrane abuts tightly over a few millimeters in length against the electric wire, so that an airtight seal is provided.

Due to the electric wirings being enclosed airtight and the installation material being installed in an airtight manner onto the front plate of the hollow wall, it is prevented that air flows through the installation box from the installation opening towards the sprout insert 24, or vice versa, thereby preventing draught being caused by the installation box 10.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Assembly of an installation box (10) and electric installation material with electric wirings, wherein the installation box comprises a housing with a first bottom wall (11) and a first circumferential wall (12) upright from the first bottom wall, wherein the first bottom wall (11) and the first circumferential wall (12) together enclose an installation space for electric installation material, wherein an upper edge (14) of the first circumferential wall (12) facing away from the first bottom wall (11) confines an installation opening for providing access to the installation space, wherein the first circumferential wall (12) is provided with at least one pair of slide couplings (19), such that the installation box (10) is couplable with a further installation box, and with a passage (20, 25) below each of the at least one pair of slide couplings (19) for electric wirings to pass through the first circumferential wall, **characterized in that** the installation box (10) further comprises a separate airtight insert (50) in the installation space, wherein the airtight insert comprises a second bottom wall (51) and a second circumferential wall (52) upright from the second bottom wall (51) and an upper edge (53) facing away from the second bottom wall (51), wherein the second circumferential wall (52) is provided with at least one first membrane (57) adjacent to the passage below the at least one pair of slide couplings (19), wherein the outer side of the second bottom wall (51) and the second circumferential wall (52) are beyond the installation opening and the passage (20, 25) complementary to the inner side of the first bottom wall (11) and the first circumferential wall (12), wherein the airtight insert comprises an inner layer (70) manufactured from a rigid material, such as polyolefin, preferably polypropylene, and an outer layer (71) manufactured from an elastic material, such as a thermoplastic elastomer, wherein the at least one first membrane (57) is provided by the outer layer (71) of the airtight insert (50), and the first membrane (57) is framed by an aperture (67) in the inner layer (70) of the airtight insert (50), and wherein the second circumferential wall (52) has a second membrane (59) with one or more target fractures (60) that may be closed off with a membrane, through which the electric wirings can pass, wherein the electric wirings passing through the one or more target fractures (60) are enclosed in an airtight manner.

2. Assembly according to claim 1, wherein the airtight insert (50) is manufactured by means of injection moulding, preferably 2K injection moulding.

3. Assembly according to any of the preceding claims, wherein the airtight insert (50) comprises an airtight flange (54) provided at or near the upper edge (53) of the second circumferential wall.

4. Assembly according to claim 2 and claim 3, wherein the airtight flange (54) is part of the outer layer (71) of the airtight insert (50), and/or wherein the airtight flange (54) extends in a direction substantially parallel to the second bottom wall (51) and over and beyond the upper edge of the first circumferential wall (12), wherein the airtight flange (54) is configured to abut at least a part of the electric installation material, and/or wherein the installation box (10) is provided with two or more first flanges (22) that form one unity with and project from the first circumferential wall (12) in a direction parallel to the first bottom wall (11), and wherein the airtight flange (54) comprises two or more receiving recesses (75) at a side of the airtight flange (54) facing the first and/or second bottom wall (11, 51), wherein each of the receiving recesses (75) is adapted for receiving one of the two or more first flanges (22).

5. Assembly according to any one of the preceding claims, wherein the installation box (10) comprises two or more opposite mounting plates (16) adjacent to the upper edge (14) of the first circumferential wall (12), in which mounting screws (18) for the installation material are received, wherein the airtight insert (50) comprises two or more opposite securing plates (55) adjacent to the upper edge (53) of the second circumferential wall (52), which securing plates (55) are placed onto the mounting plates (16) and through which the mounting screws (18) pass.

6. Assembly according to claim 2 and claim 5, wherein the securing plates (55) are part of the inner layer (70) of the airtight insert (50), wherein the outer layer (71) of the airtight insert (50) preferably comprises securing openings (72) for receiving the securing plates (55) .

7. Assembly according to any one of claims 3-4, wherein the airtight insert (50) comprises two or more opposite sub-flanges (58) at or near the upper edge (53) of the second circumferential wall (52), wherein the airtight flange (54) preferably is provided with two or more flange openings (73) for receiving the two or more sub-flanges (54) .

8. Assembly according to claim 7, wherein the sub-flanges (54) are part of the inner layer (70) of the airtight insert (50).

9. Assembly according to any one of the preceding claims, wherein the number of target fractures (60) corresponds to the number of wires of the electric wirings.

10. Assembly according to claim 9, wherein the second membrane (59) with the one or more target fractures (60) is provided in the outer layer (71) of the airtight insert (50), and wherein the second membrane (59) with the one or more target fractures (60) is framed by at least one aperture (69) provided in the inner layer (70) of the airtight insert (50).

## Patentansprüche

1. Anordnung einer Installationsdose (10) und elektrischen Installationsmaterials mit elektrischen Leitungen, wobei die Installationsdose ein Gehäuse mit einer ersten Bodenwand (11) und einer von der ersten Bodenwand aufrecht abstehenden ersten Umfangswand (12) umfasst, wobei die erste Bodenwand (11) und die erste Umfangswand (12) zusammen einen Installationsraum für elektrisches Installationsmaterial umschließen, wobei ein von der ersten Bodenwand (11) abgewandter oberer Rand (14) der ersten Umfangswand (12) eine Installationsöffnung für den Zugang zu dem Installationsraum begrenzt, wobei die erste Umfangswand (12) mit wenigstens einem Paar von Schiebekupplungen (19), so dass die Installationsdose (10) mit einer weiteren Installationsdose kuppelbar ist, und unterhalb jedes des wenigstens einen Paares von Schiebekupplungen (19) mit einem Durchgang (20, 25) zum Durchführen von elektrischen Leitungen durch die erste Umfangswand versehen ist, **dadurch gekennzeichnet, dass** die Installationsdose (10) ferner einen separaten luftdichten Einsatz (50) in dem Installationsraum umfasst, wobei der luftdichte Einsatz eine zweite Bodenwand (51) und eine von der zweiten Bodenwand (51) aufrecht abstehende zweite Umfangswand (52) und einen von der zweiten Bodenwand (51) abgewandten oberen Rand (53) umfasst, wobei die zweite Umfangswand (52) mit wenigstens einer ersten Membran (57) versehen ist, die zu dem Durchgang unterhalb des wenigstens einen Paares von Schiebekupplungen (19) benachbart ist, wobei die Außenseite der zweiten Bodenwand (51) und die zweite Umfangswand (52) jenseits der Installationsöffnung und des Durchgangs (20, 25) komplementär zu der Innenseite der ersten Bodenwand (11) und der ersten Umfangswand (12) sind, wobei der luftdichte Einsatz eine Innenschicht (70), die aus einem starren Material wie beispielsweise Polyolefin, vorzugsweise Polypropylen, gefertigt ist, und eine Außenschicht (71), die aus einem elastischen Material wie beispielsweise einem thermoplastischen Elastomer gefertigt ist, umfasst, wobei die wenigstens eine erste Membran (57) durch die Außenschicht (71) des luftdichten Einsatzes (50) bereitgestellt wird, wobei die erste Membran (57) durch eine Öffnung (67) in der Innenschicht (70) des luftdichten Einsatzes (50) umrahmt wird, und wobei die zweite Umfangswand (52) eine zweite Membran (59) mit einer oder mehreren mit einer Membran verschließbaren Sollbruchstellen (60) aufweist, durch die die elektrischen Leitungen hindurchgeführt werden können, wobei die durch die eine oder die mehreren Sollbruchstellen (60) hindurchgeführten elektrischen Leitungen luftdicht umschlossen sind.

2. Anordnung nach Anspruch 1, wobei der luftdichte Einsatz (50) mittels Spritzgussverfahren, vorzugsweise mittels 2K-Spritzgussverfahren, gefertigt ist.

3. Anordnung nach einem der vorangehenden Ansprüche, wobei der luftdichte Einsatz (50) einen luftdichten Flansch (54) umfasst, der an oder in der Nähe des oberen Randes (53) der zweiten Umfangswand vorgesehen ist.

4. Anordnung nach Anspruch 2 und Anspruch 3, wobei der luftdichte Flansch (54) Teil der Außenschicht (71) des luftdichten Einsatzes (50) ist, und/oder wobei sich der luftdichte Flansch (54) in einer Richtung im Wesentlichen parallel zu der zweiten Bodenwand (51) und über den oberen Rand der ersten Umfangswand (12) und darüber hinaus erstreckt, wobei der luftdichte Flansch (54) dafür konfiguriert ist, an wenigstens einem Teil des elektrischen Installationsmaterials anzuliegen, und/oder wobei die Installationsdose (10) mit zwei oder mehr ersten Flanschen (22) versehen ist, die eine Einheit mit der ersten Umfangswand (12) bilden und von dieser in einer Richtung parallel zu der ersten Bodenwand (11) hervorstehen, und wobei der luftdichte Flansch (54) zwei oder mehr Aufnahmeaussparungen (75) an einer Seite des luftdichten Flansches (54) umfasst, die der ersten und/oder der zweiten Bodenwand (11, 51) zugewandt ist, wobei jede der Aufnahmeaussparungen (75) zum Aufnehmen eines der zwei oder mehr ersten Flansche (22) eingerichtet ist.

5. Anordnung nach einem der vorangehenden Ansprüche, wobei die Installationsdose (10) zwei oder mehr gegenüberliegende Montageplatten (16) benachbart zu dem oberen Rand (14) der ersten Umfangswand (12) umfasst, in denen Montageschrauben (18) für das Installationsmaterial aufgenommen werden, wobei der luftdichte Einsatz (50) zwei oder mehr gegenüberliegende Befestigungsplatten (55) benachbart zu dem oberen Rand (53) der zweiten Umfangswand (52) umfasst, die auf die Montageplatten (16) aufgesetzt werden und durch die die Montageschrauben (18) hindurchdringen.

6. Anordnung nach Anspruch 2 und Anspruch 5, wobei die Befestigungsplatten (55) Teil der Innenschicht (70) des luftdichten Einsatzes (50) sind, wobei die Außenschicht (71) des luftdichten Einsatzes (50) vorzugsweise Befestigungsöffnungen (72) zum Aufnehmen der Befestigungsplatten (55) umfasst.

7. Anordnung nach einem der Ansprüche 3 bis 4, wobei der luftdichte Einsatz (50) zwei oder mehr gegenüberliegende Teilflansche (58) an dem oder in der Nähe des oberen Randes (53) der zweiten Umfangswand (52) umfasst, wobei der luftdichte Flansch (54) vorzugsweise mit zwei oder mehr Flanschöffnungen (73) zum Aufnehmen der zwei oder mehr Teilflansche (54) versehen ist.

8. Anordnung nach Anspruch 7, wobei die Teilflansche (54) Teil der Innenschicht (70) des luftdichten Einsatzes (50) sind.

9. Anordnung nach einem der vorangehenden Ansprüche, wobei die Anzahl der Sollbruchstellen (60) der Anzahl der Drähte der elektrischen Leitungen entspricht.

10. Anordnung nach Anspruch 9, wobei die zweite Membran (59) mit der einen oder den mehreren Sollbruchstellen (60) in der Außenschicht (71) des luftdichten Einsatzes (50) vorgesehen ist, und wobei die zweite Membran (59) mit der einen oder den mehreren Sollbruchstellen (60) von wenigstens einer in der Innenschicht (70) des luftdichten Einsatzes (50) vorgesehenen Öffnung (69) umrahmt ist.

## Revendications

1. Assemblage d'une boîte d'installation (10) et d'un matériel d'installation électrique avec des câblages électriques, dans lequel la boîte d'installation comprend un logement qui comporte une première paroi de fond (11) et une première paroi circonférentielle (12) dirigée verticalement depuis la première paroi de fond, dans lequel la première paroi de fond (11) et la première paroi circonférentielle (12) renferment ensemble un espace d'installation pour le matériel d'installation électrique, dans lequel un bord supérieur (14) de la première paroi circonférentielle (12) dirigée vers l'opposé de la première paroi de fond (11) confine une ouverture d'installation pour assurer un accès à l'espace d'installation, dans lequel la première paroi circonférentielle (12) est munie d'au moins une paire de moyens d'accouplement à glissement (19), de telle sorte que la boîte d'installation (10) puisse être couplée à une autre boîte d'installation, et d'un passage (20, 25) au-dessous de chacune de l'au moins une paire de moyens d'accouplement à glissement (19) pour que des câblages électriques passent au travers de la première paroi circonférentielle, **caractérisé en ce que** la boîte d'installation (10) comprend en outre un insert étanche à l'air séparé (50) dans l'espace d'installation, dans lequel l'insert étanche à l'air comprend une seconde paroi de fond (51) et une seconde paroi circonférentielle (52) dirigée verticalement depuis la seconde paroi de fond (51) et un bord supérieur (53) dirigée vers l'opposé de la seconde paroi de fond (51), dans lequel la seconde paroi circonférentielle (52) est munie d'au moins une première membrane (57) qui est adjacente au passage au-dessous de l'au moins une paire de moyens d'accouplement à glissement (19), dans lequel le côté externe de la seconde paroi de fond (51) et la seconde paroi circonférentielle (52) sont au-delà de l'ouverture d'installation et du passage (20, 25) de façon complémentaire par rapport au côté interne de la première paroi de fond (11) et à la première paroi circonférentielle (12), dans lequel l'insert étanche à l'air comprend une couche interne (70) qui est fabriquée à partir d'un matériau rigide tel qu'une polyoléfine, de préférence du polypropylène, et une couche externe (71) qui est fabriquée à partir d'un matériau élastique tel qu'un élastomère thermoplastique, dans lequel l'au moins une première membrane (57) est constituée par la couche externe (71) de l'insert étanche à l'air (50), et la première membrane (57) est encadrée dans une ouverture (67) qui est ménagée dans la couche interne (70) de l'insert étanche à l'air (50), et dans lequel la seconde paroi circonférentielle (52) comporte une seconde membrane (59) qui présente une ou plusieurs fracture(s) cible(s) (60) qui peut/peuvent être obturée(s) par une membrane, fracture(s) au travers de laquelle/desquelles les câblages électriques peuvent passer, dans lequel les câblages électriques qui passent au travers des une ou plusieurs fractures cibles (60) sont renfermés d'une manière étanche à l'air.

2. Assemblage selon la revendication 1, dans lequel l'insert étanche à l'air (50) est fabriqué au moyen d'un moulage par injection, de préférence un moulage par injection 2K.

3. Assemblage selon l'une quelconque des revendications précédentes, dans lequel l'insert étanche à l'air (50) comprend une bride étanche à l'air (54) qui est prévue au niveau du bord supérieur (53) de la seconde paroi circonférentielle ou à proximité de celui-ci.

4. Assemblage selon la revendication 2 et la revendication 3, dans lequel la bride étanche à l'air (54) est une partie de la couche externe (71) de l'insert étanche à l'air (50), et/ou dans lequel la bride étanche à l'air (54) est étendue dans une direction qui est sensiblement parallèle à la seconde paroi de fond (51) ainsi qu'au-dessus et au-delà du bord supérieur de la première paroi circonférentielle (12), dans lequel la bride étanche à l'air (54) est configurée pour venir en butée contre au moins une partie du matériau d'installation électrique, et/ou dans lequel la boîte d'installation (10) est munie de deux premières brides ou plus (22) qui forment une unité avec la première paroi circonférentielle (12) et qui font saillie depuis celle-ci dans une direction qui est parallèle à la première paroi de fond (11), et dans lequel la bride étanche à l'air (54) comprend deux évidements de réception ou plus (75) au niveau d'un côté de la bride étanche à l'air (54) qui fait face aux/à la première et/ou seconde paroi (s) de fond (11, 51), dans lequel chacun des évidements de réception (75) est adapté pour recevoir l'une des deux premières brides ou plus (22).

5. Assemblage selon l'une quelconque des revendications précédentes, dans lequel la boîte d'installation (10) comprend deux plaques de montage opposées ou plus (16) qui sont adjacentes au bord supérieur (14) de la première paroi circonférentielle (12), plaques de montage dans lesquelles des vis de montage (18) pour le matériau d'installation sont reçues, dans lequel l'insert étanche à l'air (50) comprend deux plaques de fixation ferme et sécurisée opposées ou plus (55) qui sont adjacentes au bord supérieur (53) de la seconde paroi circonférentielle (52), lesquelles plaques de fixation ferme et sécurisée (55) sont placées sur les plaques de montage (16) et au travers desquelles les vis de montage (18) passent.

6. Assemblage selon la revendication 2 et la revendication 5, dans lequel les plaques de fixation ferme et sécurisée (55) sont une partie de la couche interne (70) de l'insert étanche à l'air (50), dans lequel la couche externe (71) de l'insert étanche à l'air (50) comprend de préférence des ouvertures de fixation ferme et sécurisée (72) pour recevoir les plaques de fixation ferme et sécurisée (55).

7. Assemblage selon l'une quelconque des revendications 3 et 4, dans lequel l'insert étanche à l'air (50) comprend deux sous-brides opposées ou plus (58) au niveau du bord supérieur (53) de la seconde paroi circonférentielle (52) ou à proximité de celui-ci, dans lequel la bride étanche à l'air (54) est de préférence munie de deux ouvertures de bride ou plus (73) pour recevoir les deux sous-brides ou plus (54) .

8. Assemblage selon la revendication 7, dans lequel les sous-brides (54) sont une partie de la couche interne (70) de l'insert étanche à l'air (50).

9. Assemblage selon l'une quelconque des revendications précédentes, dans lequel le nombre de fractures cibles (60) correspond au nombre de fils des câblages électriques.

10. Assemblage selon la revendication 9, dans lequel la seconde membrane (59) qui est munie des une ou plusieurs fractures cibles (60) est prévue dans la couche externe (71) de l'insert étanche à l'air (50), et dans lequel la seconde membrane (59) qui est munie des une ou plusieurs fractures cibles (60) est délimitée par au moins une ouverture (69) qui est ménagée dans la couche interne (70) de l'insert étanche à l'air (50).
